# EUROPEAN PATENT SPECIFICATION

(11) **EP 1 264 651 B1**
(45) Date of publication and mention of the grant of the patent: **23.03.2005**
(21) Application number: 02252992.9
(22) Date of filing: 26.04.2002
(51) Int. Cl.: B22D 27/02, B22D 27/08

(54) **Method for propagating vibration into a conductive fluid and method for solidifying a melted metal using the same propagating method of vibration**
Verfahren zum Fortpflanzen von Vibrationen in einer leitfähigen Flüssigkeit und Verfahren zum Erstarren eines geschmolzenen Metalls nach demselben Verfahren
Procédé de propagation de vibration dans un fluide conducteur et procédé de solidification d'un métal liquide utilisant le même procédé

(30) Priority: 26.04.2001 JP 2001128634
(43) Date of publication of application: 11.12.2002
(73) Proprietor: NAGOYA UNIVERSITY, Nagoya City Aichi Pref. (JP)
(72) Inventor: Iwai, Kazuhiko, Nagoya City, Aichi Pref. (JP); Asai, Shigeo, Nagoya City, Aichi Pref. (JP)
(74) Representative: Paget, Hugh Charles Edward

(56) References cited:
- EP-A- 1 091 008
- DE-B- 1 180 899
- DE-C- 972 054
- US-A- 3 434 823
- US-A- 4 244 796
- "Current advances in materials and processes. Program of the 139th ISIJ meeting (March 29-31, 2000)" 2000 , ISIJ , JAPAN XP002235023 * page 150-152 *
- BOJAREVICS A.: "Liquid metal turbulent flow dynamics in a cylindrical container with free surface" MAGNETOHYDRODYNAMICS, vol. 35, no. 3, 1999, pages 258-260, XP002235022 Latvia
- KAWAI S.: "Generation of compression waves by simultaneously imposing a static magnetic field an an alternating current and its use for refinement of solidified structure" MATERIALS TRANSACTIONA, vol. 42, no. 2, 2001, pages 275-280, XP009007502
- PATENT ABSTRACTS OF JAPAN vol. 2002, no. 05, 3 May 2002 (2002-05-03) -& JP 2002 018559 A (NIPPON STEEL CORP;IWAI KAZUHIKO; ASAI SHIGEO), 22 January 2002 (2002-01-22)
- PATENT ABSTRACTS OF JAPAN vol. 2002, no. 03, 3 April 2002 (2002-04-03) -& JP 2001 321908 A (NIPPON STEEL CORP;IWAI KAZUHIKO; ASAI SHIGEO), 20 November 2001 (2001-11-20)

## Description

### Background of the Invention

### Field of the Invention

This invention relates to a method for propagating vibration into a conductive fluid and a method for solidifying a melted metal using the same propagating method of vibration.

### Description of the prior art

The control of solidification structure and the refinement can be performed effectively by imparting vibration into the melted liquid metal to be solidified. For example, it is well known that solidification process is started by imparting mechanical impact to a supercooled liquid metal. It is also well known that fine structure can be created by imparting vibration to a melted liquid metal during solidification and degasifying process is promoted by applying compressional wave to a melted liquid metal.

On laboratory scale, by imparting a given mechanical vibration to the whole of a vessel where a liquid metal is charged, a given vibration can be easily imparted to the liquid metal. On large industrial scale, however, it is difficult to vibrate the whole of a huge vessel mechanically. Therefore, as of now, such an attempt is made as to position a magnetostrictive oscillator or an electrostrictive oscillator in a liquid metal, and thus, impart a given vibration to the liquid metal. Also, such an attempt is made as to introduce a compressional wave which is generated by a speaker into a liquid metal and thus, impart a given vibration to the liquid metal.

However, if such a magnetostrictive oscillator or an electrostrictive oscillator is employed, it may be melted or destroyed in the liquid metal, to contaminate the liquid metal. Also, the amplitude of the vibration to be imparted is restricted due to the limitation of the output power level of the oscillator. Moreover, if such a compressional wave is employed, it may be reflected almost entirely at the boundary between the liquid metal and the environmental atmosphere, not to be imparted to the liquid metal because the acoustic resistance between the liquid metal and the environmental atmosphere is increased. As a result, a method for propagating vibration into a liquid metal is not be developed particularly on the large industrial scale, at present.

EP 1091008 describes apparatus for generating compression waves in conductive liquid. This document discloses applying an AC electromagnetic force (e.g. via an AC magnetic or electric field) to generate the compression waves. An extra DC magnetic field may be applied to effect stronger generation of compression waves.

In Current Advances in Materials and Processes, Vol. 13, No.1, p. 152, Kojima describes the formation of Alfvén waves in liquid Ga using a high magnetic field with an alternating electric current. This experiment was conducted on a laboratory scale.

### Summary of the Invention

It is an object of the present invention to provide a new method for propagating vibration into a liquid metal which is usable on a large industrial scale.

According to the invention, there is provided a method for solidifying a melted metal as set out in claim 1.

The inventors have intensely studied to achieve the above object. They conceived that by applying an electromagnetic force to a melted conductive fluid such as a liquid metal, instead of conventionally utilizing a mechanical vibration, an oscillator or a speaker, a given vibration is generated and propagated in the conductive fluid.

From the past, it is well known that a compressional wave can be propagated into a conductive fluid such as a liquid metal. On the other hand, the vibration originated from the electromagnetic force is a transverse wave. Therefore, in the present invention, the transverse wave is generated and propagated in the conductive fluid, to impart a given vibration to the conductive fluid. As mentioned above, since it is known that only a compressional wave can be propagated into the conductive fluid, the inventors had intensely studied to generate and propagate a transverse wave originated from the electromagnetic force.

If a static magnetic field of relatively large strength is applied to a conductive fluid, a given disturbance of magnetic field is generated due to the static magnetic field to be applied, and then, propagated in convection. That is, if the conductive fluid is moved under the static magnetic field, an inductive current is generated and thus, the distribution of the static magnetic field to be applied is changed. In this case, the conductive fluid is moved as the magnetic flux lines are attached to the fluid particles.

Then, the inventors found out that by applying the static magnetic field and a given wave to the conductive fluid under the above-mentioned condition so that a given requirement is satisfied, a transverse wave can be generated and propagated into the conductive fluid. As a result, a given vibration can be generated and propagated in the conductive fluid by the electromagnetic force. This invention is realized on the vast researches and developments as mentioned above.

According to the propagating method of vibration, a given vibration is generated in a conductive fluid by a given electromagnetic force originated from a static magnetic field and a wave. Therefore, without a large-scale apparatus, the vibration can be easily generated in the conductive fluid. In this point of view, the propagating method of the present invention can be preferably employed on a large industrial scale.

The propagating method of the present invention is utilized for solidifying a melted liquid metal. In this case, a given static magnetic field and a given wave are applied to the liquid metal during the solidification process so as to satisfy the above-requirement according to the present invention. In this case, the size of the solidification structure can be controlled unrestrainedly, and thus, the solidification structure can be easily fined.

### Brief Description of the Drawings

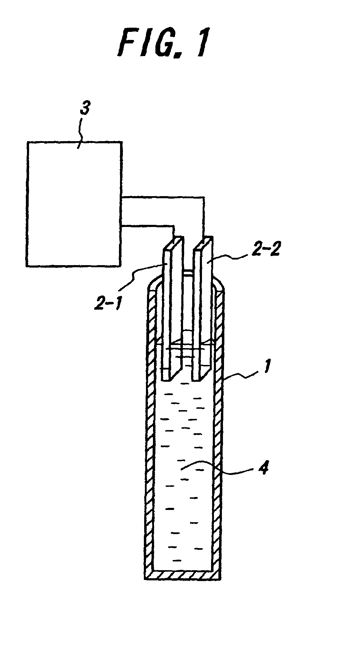

For better understanding of the present invention, reference is made to the attached drawings, wherein
Fig. 1 is a schematic view showing an apparatus which is employed for solidifying a SnPb alloy according to the propagating method of vibration of the present invention.

### Description of the Preferred Embodiments

This invention will be described in detail with reference to the accompanying drawings. In the present invention, it is required that a given static magnetic field and a given wave are applied to a conductive fluid so as to satisfy the above equation (1). Only if the equation (1) is satisfied, the kind of wave and the frequency of wave are not restricted. In a real process such as the solidification of a liquid metal, however, since the electric conductivity of the liquid metal is within a range of 10⁵-10⁷S/m and the density of the liquid metal is within a range of 10³-10⁴kg/m³, the equation (1) is satisfied by applying a static magnetic field having a strength within a range of several Tesla through several ten Tesla and applying a wave having a frequency within a range of several hundred Hz through several thousand Hz. For example the magnetic field strength may be in the ragne 2 to 50 T and the frequency of the wave may be in the range 100 to 5000 Hz.

In this case, a given disturbance of magnetic field is generated due to the static magnetic field to be applied and propagated in convention in the conductive fluid. That is, the distribution of magnetic field is determined by the convection. Therefore, a given transverse wave is generated and propagated in the conductive fluid, originated from the magnetic force of the static magnetic field and the wave, as mentioned above. As a result, a given vibration can be generated and propagated in the conductive fluid, originated from the transverse wave.

Such a static magnetic field can be generated from a super conductive magnet. Also, such a wave can be generated from a given external AC power supply. That is, an AC electric field from the external AC power supply can be utilized as the wave to be used in the present invention. In this way, the static magnetic field and the wave to be utilized in the present invention and satisfying the equation (1) can be easily obtained from the super conductive magnet and the external AC power supply, respectively.

The transverse wave generated in the conductive fluid when the equation (1) is satisfied is estimated as an Alfven wave. The Alfven wave is being intensely researched in astronomical physics and plasma engineering, but not almost done in industrial field. Therefore, the Alfven wave is not almost utilized in the industrial field. In view of the industrial use of the Alfven wave, too, the present invention is quite important.

The propagating method of vibration of the present invention can be employed for various industrial fields. Particularly, if the method is employed for solidifying a melted liquid metal, the solidification structure can be controlled freely, and then, fined. In addition, the method may be employed for degasification, promotion of refining reaction and control of solid-liquid boundary face configuration.

### Example:

The example where the propagating method of vibration of the present invention is applied for solidifying a melted metal will be described in detail, hereinafter.

### (Example)

In this example, such an apparatus as shown in Fig. 1 was employed, and an alloy having a composition of Sn-10mol%Pb (hereinafter, called as a "SnPb alloy") was melted and then, solidified. In the apparatus shown in Fig. 1, a cylindrical vessel 1 (internal diameter: 30 mm, height: 150 mm) made of glass is employed, and electrodes 2-1 and 2-2 (each width: 10 mm, each thickness: 2 mm) made of Cu are disposed in the vessel 1 so as to be opposite to one another. Also, an external AC power supply 3 is connected to the ends of the electrodes 2-1 and 2-2. The vessel 1 including the electrodes 2-1 and 2-2 is placed in a super conductive magnet (not shown).

A SnPb alloy 4 melted was charged in a depth of 120 mm in the vessel 1, and then, the electrodes 2-1 and 2-2 were immersed in the melted SnPb alloy 4 by a length of 20 mm, respectively. Then, a static magnetic field of a strength of 10T was applied from the super conductive magnet (not shown) and an AC electric field of a frequency of 200 Hz and an amplitude of 100A was applied from the external AC power supply 3 to the SnPb alloy 4. Since the electric conductivity of the SnPb alloy 4 is 10⁶-10⁷ S/m and the density p of the SnPb alloy 4 is about 10⁴ kg/m³, in this example, the above equation (1) is satisfied by the static magnetic field and the AC electric field as mentioned above. Under the condition, the SnPb alloy 4 was solidified at a cooling rate of 0.1 K/sec.

When the solidification structure of the SnPb alloy solidified was observed, the size of the solidification structure was about 1 mm or below at both of the upper side and the lower side of the vessel 1.

When the pressure of a wave propagating in the melted SnPn alloy 4 was measured by a sensor provided at the bottom portion of the vessel 1, it was turned out to be almost proportion to the current value of the AC electric field applied from the external AC power supply 3. Therefore, during the above solidification process, it was turned out that a given Alfven wave was generated in the melted SnPb alloy 4, and it is estimated that the Alfven wave was propagated in the SnPb alloy 4.

### (Comparative Example)

Except that the static magnetic field and the AC electric field were not applied and thus, a given wave which is estimated as the Alfven wave was not propagated, the melted SnPb alloy 4 was solidified in the same manner as Example. When the solidification structure of the SnPb alloy solidified was observed, the size of the solidification structure was roughed at both of the upper side and the lower side of the vessel 1. Particularly, at the lower side of the vessel 1, the size of the solidification structure was enlarged up to about several mm.

Although the present invention was described in detail with reference to the above examples, this invention is not limited to the above disclosure and every kind of variation and modification may be made without departing from the scope of the present invention.

As mentioned above, only by applying a given static magnetic field and a given electric field to a conductive fluid, according to the present invention, a given vibration can be generated and propagated in the conductive fluid without a large scale and complicated apparatus. Therefore, the propagating method of vibration of the present invention may be employed for various industrial fields, and for example, preferably as a solidification structure controlling method for a liquid metal melted.

## Claims

1. A method for solidifying a melted metal, comprising the steps of:
preparing a melted metal, and
applying a static magnetic field and a wave to said melted metal to as to satisfy the equation of:${\text{2πf<(σ/ρ)B}}^{\text{2}} \text{,}$
where f is the frequency (Hz) of the wave to be applied, σ is the electric conductivity (S/m) of the melted metal, ρ is the density (kg/m³) of the melted metal, and B is the strength (T) of the static magnetic field to be applied, thereby to generate and propagate a vibration in said melted metal,
wherein the vibration is a transverse wave.

2. A method as defined in claim 1, wherein an AC electric field from an external AC power supply applies said wave to said melted metal.

3. A method as defined in claim 1 or 2, wherein a disturbance of magnetic field is generated due to convection of said melted metal in the applied static magnetic field.

4. A method as defined in any one of claims 1 to 3, wherein an Alfvén wave is generated and propagated in said melted metal.

## Patentansprüche

1. Verfahren zur Verfestigung eines geschmolzenen Metalls, folgende Schritte umfassend:
Herstellen eines geschmolzenen Metalls, und
Anlegen eines statischen Magnetfeldes und einer Welle an das geschmolzene Metall, um der folgenden Gleichung zu genügen:${\text{2πf<(σ/ρ)B}}^{\text{2}} \text{,}$
worin f die Frequenz (Hz) der anzulegenden Welle ist, σ die elektrische Leitfähigkeit (S/m) des geschmolzenen Metalls ist, ρ die Dichte (kg/m³) des geschmolzenen Metalls ist und B die Stärke (T) des anzulegenden statischen Magnetfeldes ist, um eine Schwingung im geschmolzenen Metall zu erzeugen und auszubreiten,
worin die Schwingung eine Transversalwelle ist.

2. Verfahren nach Anspruch 1, worin die Welle mittels eines elektrischen Wechselstromfelds einer äußeren Wechselstromquelle an das geschmolzene Metall angelegt wird.

3. Verfahren nach Anspruch 1 oder 2, worin aufgrund von Konvektion des geschmolzenen Metalls im angelegten statischen Magnetfeld eine Störung des Magnetfelds erzeugt wird.

4. Verfahren nach einem der Ansprüche 1 bis 3, worin im geschmolzenen Metall eine Alfvén-Welle erzeugt und ausgebreitet wird.

## Revendications

1. Un procédé de solidification d'un métal fondu, comprenant les étapes consistant à:
préparer un métal fondu, et
appliquer un champ magnétique statique et une onde audit métal fondu de manière à satisfaire à la relation:${\text{2πf<(σ/ρ)B}}^{\text{2}} \text{,}$ où f est la fréquence (Hz) de l'onde devant être appliquée, σ est la conductivité électrique (S/m) du métal fondu, ρ est le masse spécifique (kg/m³) du métal fondu, et B est l'intensité (T) du champ magnétique statique devant être appliqué, de manière ainsi à produire et à propager une vibration dans ledit métal fondu,
dans laquelle la vibration est une onde transversale.

2. Un procédé tel que défini à la revendication 1, dans lequel un champ électrique de courant alternatif en provenance d'une alimentation d'énergie électrique externe en courant alternatif applique ladite onde audit métal fondu.

3. Un procédé tel que défini à la revendication 1 ou 2, dans lequel une perturbation de champ magnétique est produite du fait d'une convection dudit métal fondu dans le champ magnétique statique appliqué.

4. Un procédé tel que défini à l'une quelconque des revendications 1 à 3, dans lequel une onde d'Alfnén est produite et propagée dans ledit métal fondu.
